# DEMANDE DE BREVET EUROPEEN

(11) **EP 1 931 105 A1**
(43) Date de publication de la demande: **11.06.2008**
(21) Numéro de dépôt: 07291456.7
(22) Date de dépôt: 05.12.2007
(51) Int. Cl.: H04L 29/06

(54) **Procédé et système de gestion de sessions multimédia, permettant de contrôler l'établissement de canaux de communication**

(30) Priorité: 06.12.2006 FR 0610630
(71) Demandeur: Societé Française du Radiotéléphone, 75008 Paris (FR)
(72) Inventeur: Bouvier, Christian, 91470 Limours (FR); Wary, Jean-Philippe, 92340 Bourg la Reine (FR)
(74) Mandataire: Debay, Yves

(57) **Abrégé**

Le procédé de gestion de sessions multimédia comporte :
- une étape (50) de recensement d'anomalies représentatives d'usages illicites d'un protocole de signalisation déterminé ;
- une étape (500) de définition de réactions en fonction de l'anomalie recensée ;
- une étape (51) de collecte de l'ensemble des requêtes échangées entre un terminal client et un serveur proxy ;
- une étape (52) d'analyse des requêtes collectées pour détecter des anomalies, par utilisation d'une pluralité d'indicateurs associés chacun à une des anomalies recensées ; et
- en cas de détection d'au moins une anomalie, un déclenchement par le serveur proxy d'une réaction en correspondance avec l'anomalie détectée, ladite réaction incluant une intervention en temps réel au cours de la communication relative au message qui comporte l'anomalie.

Le procédé permet ainsi la détection et le filtrage en temps réel de canaux cachés utilisés dans un protocole de signalisation tel que SIP.

## Description

### DOMAINE TECHNIQUE DE L'INVENTION

La présente invention concerne les télécommunications, et plus particulièrement, dans le but de contrôler l'établissement de canaux de communication dans un réseau géré par un opérateur, un procédé de gestion de sessions multimédia.

### ARRIERE-PLAN TECHNOLOGIQUE DE L'INVENTION

La technologie voix sur IP (Internet Protocol) ou VoIP et plus généralement les technologies permettant l'établissement de sessions multimédia utilisent le plus fréquemment le protocole SIP (Session Initiation protocol), qui est un standard ouvert interopérable. D'autres protocoles de signalisation, par exemple H323, MGCP (Media Gateway Control Protocol) et Megaco (ce dernier protocole ayant été choisi dans la norme UMTS par le 3GPP pour le contrôle des passerelles Media Gateways) peuvent être utilisés pour les sessions multimédia.

Le protocole SIP est normalisé par l'IETF (Internet Engineering Task Force) et décrit en particulier par le RFC 3261. Le protocole SIP a été conçu pour établir, modifier et terminer des sessions multimédia (voir par exemple RFC 2543). Il se charge de l'authentification et la localisation des multiples participants. Il se charge également de la négociation sur les types de média utilisables par les différents participants en encapsulant des messages SDP (Session Description Protocol). Le protocole SIP ne transporte pas les données échangées durant la session comme la voix ou la vidéo. Ce protocole étant indépendant de la transmission des données, tout type de données et de protocoles peut être utilisé pour cet échange : c'est le protocole RTP (Real-time Transport Protocol) qui assure le plus souvent les sessions audio et vidéo. Un intérêt du protocole SIP est qu'il n'est pas seulement destiné à la voix sur IP mais également à de nombreuses autres applications telles que la visiophonie, la messagerie instantanée, la réalité virtuelle ou même les jeux vidéo.

Un problème lié à ce type de technologie est que les protocoles de voix sur IP et les services associés ont été définis sans aucune considération de sécurité. En particulier dans le cas de SIP, il est possible de faire du déni de service, détourner les communications, les écouter, téléphoner gratuitement, journaliser les appels, créer des canaux cachés, etc. Il est même possible de se faire appeler en usurpant un poste de téléphone en Voix sur IP d'une victime.

Les systèmes de voix sur IP reposent sur le respect de la norme par les clients. Dès lors, il suffit de développer son propre client de voix sur IP pour s'offrir une foule de possibilités d'attaques. La technologie Voix sur IP a été développée dans l'urgence, en privilégiant de multiples fonctionnalités :
choix d'aiguillage des communications, discussion à plusieurs, etc., sans prendre en compte la sécurité. En conséquence la voix sur IP n'est pas prête pour une utilisation professionnelle en entreprise.

Dans un réseau de radiotéléphonie par exemple, l'utilisation de tels protocoles (SIP / H323 / MGCP) pour des sessions multimédia peut permettre des échanges d'informations indétectables par l'opérateur. Cela pose des problèmes de contrôle des communications (moyen de communication occulte pour le terrorisme ou le grand banditisme) et il n'est pas possible à l'opérateur de facturer ces communications. Comme la norme existante ne fige pas la syntaxe ni l'usage de certains champs, il est ainsi possible d'utiliser des canaux parallèles pour diffuser des informations autres que celles nécessaires au management de sessions multimédia : des virus, cheval de Troie peuvent être transmis ou des données sensibles peuvent être récupérées à l'insu d'abonnés, sans que l'opérateur puisse le détecter. L'opérateur ne peut donc même pas répondre à ses obligations légales et réglementaires concernant l'ensemble des communications qu'il doit signaler sur requête de l'Etat, par exemple dans un cadre administratif ou judiciaire.

Du fait que les canaux cachés utilisés sont transportés par la signalisation des systèmes de voix sur IP, les opérateurs ne sont pas en mesure de facturer les canaux cachés et ne peuvent pas répondre aux obligations légales ou réglementaires.

Face aux risques de fraude sur les infrastructures SIP, ou IMS (IP Multimédia Subsystem) d'un opérateur d'un réseau ainsi que sur les infrastructures de téléphonie sur IP, il n'existe pas de solution satisfaisante pour éviter des usages illicites de ces infrastructures.

Il est connu, par le document EP 1 533 977, une méthode de détection d'attaque de déni de service contre des dispositifs utilisant le protocole SIP. Toutefois, ce type de méthode de protection de l'infrastructure de réseau SIP n'est pas adapté pour contrôler des échanges via des canaux parallèles dans les protocoles de voix sur IP. Il est également connu par le document JP 2005215935 de fournir un dispositif d'interface coupe-feu "Firewall" pour autoriser ou refuser une communication, par une analyse d'un contenu de la description SDP du message. Ce type de dispositif d'interface ne permet pas une maîtrise des échanges via des canaux parallèles, permettant à l'opérateur de gérer ce type de communication.

Il existe donc un besoin pour une solution pouvant s'appliquer aux familles avec les problématiques de sécurité suivantes :
- l'usurpation d'identité par la modification du champ « from », qui est a priori possible sur tous les messages SIP ;
- l'utilisation des canaux cachés pou l'échange d'information ou le vol d'informations en forçant un utilisateur à se connecter à un service ou à un autre utilisateur (Bounce attack).

### DESCRIPTION GENERALE DE L'INVENTION

La présente invention a donc pour objet de supprimer un ou plusieurs des inconvénients de l'art antérieur en définissant un procédé de gestion de sessions multimédia permettant à l'opérateur d'un réseau (de radiotéléphonie par exemple) de repérer l'usage malveillant des canaux cachés du protocole SIP afin de protéger ses clients ou son revenu.

L'invention vise à utiliser avantageusement un dispositif intermédiaire se plaçant en coupure dans la session multimédia entre le client et le serveur. Ce dispositif est nommé serveur « proxy » dans la suite de ce document.

A cet effet, l'invention concerne un procédé de gestion de sessions multimédia, réalisées suivant un protocole de signalisation déterminé, entre des terminaux de communication reliés par un réseau de télécommunications, caractérisé en ce qu'il comprend au préalable une étape de recensement d'anomalies représentatives d'usages illicites du protocole de signalisation et une étape de définition de réactions en fonction de l'anomalie recensée, le procédé comprenant en outre :
- une étape de collecte de l'ensemble des requêtes échangées entre un terminal client et un serveur proxy ; et
- une étape d'analyse des requêtes collectées pour détecter des anomalies, par utilisation d'une pluralité d'indicateurs associés chacun à une des anomalies préalablement recensées.

Ainsi, il est permis pour l'opérateur d'un réseau de mieux contrôler l'utilisation des canaux de communication par ses clients. L'opérateur peut respecter les obligations légales ou réglementaires puisque les utilisations détournées du protocole de signalisation pourront être signalées.

Selon une autre particularité, le procédé comprend en cas de détection d'au moins une anomalie, une étape de déclenchement par le serveur proxy d'une réaction en correspondance avec l'anomalie détectée, ladite réaction incluant une intervention en temps réel au cours de la communication relative au message qui comporte l'anomalie.

Selon une autre particularité, le procédé comporte une étape de substitution de données d'identification dans chaque requête, par le serveur proxy, avant de transférer un message vers un terminal destinataire, pour s'assurer de la non-propagation d'information cachée entre des terminaux.

Selon une autre particularité, l'étape d'analyse des requêtes collectées utilise un indicateur d'anomalie relatif à l'en-tête des paquets SIP des requêtes.

Selon une autre particularité, l'étape d'analyse des requêtes collectées utilise un indicateur d'anomalie relatif au champ d'identification de l'appelant « Call ID » de chaque requête.

Selon une autre particularité, l'étape d'analyse des requêtes collectées utilise un indicateur d'anomalie relatif à une méthode souscription/notification « SUBSCRIBE/NOTIFY ».

Selon une autre particularité, l'étape d'analyse des requêtes collectées utilise un indicateur d'anomalie relatif à l'une des méthodes utilisées dans le protocole SIP permettant une exploitation des canaux cachés.

Selon une autre particularité, l'étape d'analyse des requêtes collectées utilise un indicateur d'anomalie relatif à un descriptif de code de réponse.

Selon une autre particularité, l'étape d'analyse des requêtes collectées utilise un indicateur d'anomalie relatif au champ SDP dans la charge utile d'une requête SIP.

Selon une autre particularité, l'étape d'analyse des requêtes collectées utilise un indicateur d'anomalie relatif à une balise ou TAG de chaque requête SIP.

Le procédé selon l'invention assure ainsi une détection et un filtrage en temps réel de canaux cachés utilisés dans un protocole de signalisation tel que SIP.

Selon une autre particularité, ladite réaction comprend une étape de facturation qui est fonction de l'anomalie détectée, dans laquelle des informations nécessaires à la facturation (et respectant les obligations légales d'un opérateur) sont transmises vers un serveur dédié dit de facturation.

Cette réaction laisse l'usage des canaux cachés aux utilisateurs.

Selon une autre particularité, ladite réaction comprend une transmission d'un message d'alerte pour notifier en temps réel au moins une anomalie à un centre de supervision de la partie IP du réseau.

Selon une autre particularité, le procédé comprend une étape de gestion par un module de conversion associé au serveur proxy, pour une même requête SIP, d'une paire de champs, dans laquelle un deuxième champ est réécrit à partir du premier champ.

Selon une autre particularité, le procédé comprend lors de ladite réaction une étape de coupure de la session SIP.

Ainsi, il est permis d'empêcher la propagation d'une information insérée de façon « cachée » dans un champ d'un protocole de signalisation utilisé notamment pour le service de voix sur IP.

Un autre but de l'invention est d'apporter une solution à un ou plusieurs des problèmes rencontrés dans l'art antérieur en définissant un système permettant de gérer les sessions multimédia avec un contrôle de l'utilisation des ressources du réseau de communication.

A cet effet, l'invention concerne un système de gestion de sessions multimédia destiné à être utilisé dans un réseau de type SIP entre au moins un terminal client et un serveur proxy SIP, caractérisé en ce qu'il comprend :
- des moyens de stockage pour stocker des indicateurs d'anomalies représentatives d'usages illicites du protocole de signalisation ;
- un module de recensement d'anomalies, couplé audits indicateurs, doté d'une fonction d'analyse de requêtes SIP pour collecter l'ensemble des requêtes SIP échangées entre chacun des terminaux client et le serveur proxy SIP ;
- des modules de réaction programmés chacun pour commander une action en fonction de l'anomalie recensée, chaque module de réaction étant activé par le serveur proxy et déclenchant une intervention en temps réel au cours d'une communication relative au message qui comporte l'anomalie.

Ainsi, avec un tel système, il est permis de s'assurer qu'aucune requête SIP ne couvre un canal de communication "caché" (les indicateurs relatifs par exemple à la taille anormale de certains champs ou à la répétition inhabituelle de certains processus permettent en effet de révéler une utilisation détournée du protocole de signalisation).

Selon une autre particularité, un module de conversion est prévu dans le serveur proxy pour gérer, pour une même requête SIP, deux champs différents dont un second champ est réécrit à partir d'un premier champ par des moyens de réécriture du module de conversion.

Ainsi, une utilisation détournée d'un champ du protocole de signalisation est rendue impossible par l'opération de réécriture : des informations supplémentaires ne peuvent donc pas être propagées via ce champ.

Un objectif supplémentaire de l'invention est de proposer un réseau permettant de s'opposer à un usage malveillant de canaux cachés du protocole SIP.

A cet effet, l'invention concerne un réseau utilisant le protocole SIP, comprenant une pluralité d'éléments de réseau, caractérisé en ce qu'il comporte le système de gestion de sessions multimédia selon l'invention.

L'invention, avec ses caractéristiques et avantages, ressortira plus clairement à la lecture de la description faite en référence aux dessins annexés donnés à titre d'exemples non limitatifs dans lesquels :
- la figure 1 représente un logigramme des étapes du procédé dans un mode de réalisation de l'invention ;
- la figure 2 montre un réseau permettant une gestion de sessions multimédia selon l'invention ;
- la figure 3 illustre un premier scénario d'appel qui peut être détecté par utilisation d'un indicateur d'un système selon l'invention ;
- la figure 4 illustre un second scénario d'appel qui peut être détecté par utilisation d'un indicateur d'un système selon l'invention ;
- la figure 5 représente schématiquement un contexte IP Multimedia Subsystem (IMS), dans lequel un réseau d'opérateur de radiotéléphonie est doté d'un système de surveillance et gestion des requêtes SIP selon un mode de réalisation de l'invention.

### DESCRIPTION DES MODES DE REALISATION PREFERES DE L'INVENTION

Le protocole SIP est conçu pour établir, modifier ou terminer les sessions multimédia. Le protocole est chargé de négocier les types de média utilisables par les différents participants en encapsulant des messages SDP (Session Description Protocol). Le protocole SIP ne doit pas en revanche transporter des données échangées comme la voix ou la vidéo, durant la session.

Le procédé de gestion de sessions multimédia selon l'invention vise à traiter l'ensemble des vulnérabilités des protocoles signalisation tels que SIP. L'invention prévoit des fonctionnalités de détection, de filtrage et de réaction pour limiter voire éliminer les possibilités d'utiliser les messages de signalisation pour transmettre de l'information cachée (via des canaux cachés). A titre d'exemple non limitatif pour le protocole SIP, les usages de canaux cachés peuvent être listés comme suit:
●Méthode MESSAGE ;
● Méthode SUBSCRIBE/NOTIFY ;
● En-tête des paquets SIP (caractéristiques des sessions) ;
●Descriptif du code de réponse (req 200 OK) ;
● Champ payload SDP;
●Caller ID (@<CSeq>!!!);
●TAG.

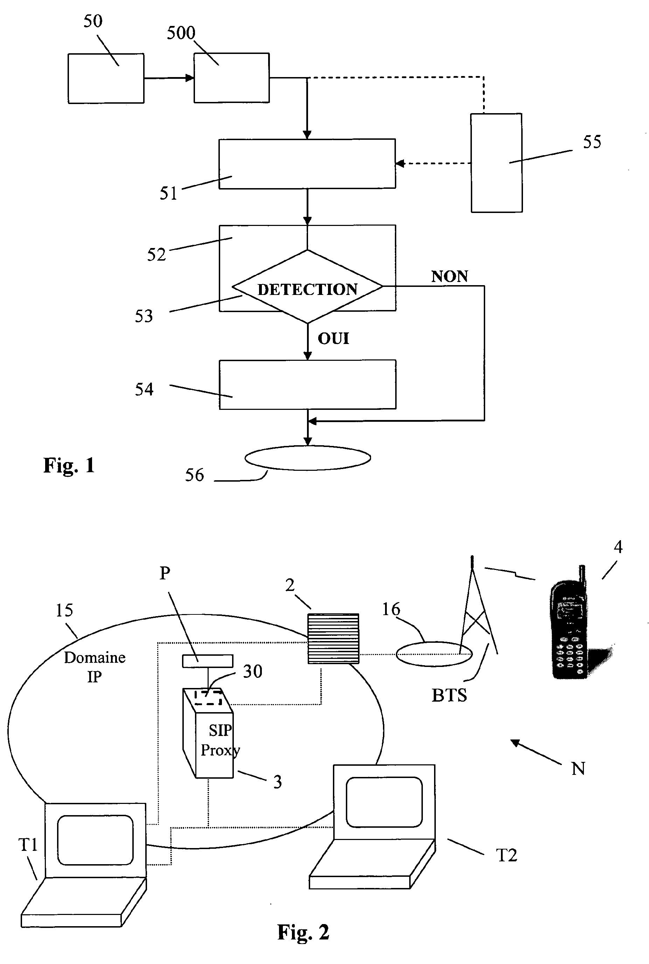

En référence à la figure 2, le réseau (N) SIP inclut un premier domaine (15) de protocole IP (Internet Protocol) permettant d'utiliser une topologie d'options de routage (traits en pointillés) et un deuxième domaine correspondant à un réseau de radiotéléphonie (16). Un domaine de type RTC (Réseau Téléphonique Commuté) peut également faire partie du réseau (N) SIP. Dans un mode de réalisation préféré, le réseau (N) SIP illustré à la figure 1 utilise une architecture de service avec un sous-système IMS (IP Multimédia Subsystem), qui permet de déployer une technologie voix sur IP. Bien que le réseau (N) SIP soit représenté comme incluant un réseau de radiotéléphonie (16) doté de stations et une partie avec connexion filaire, on comprend que n'importe quelle connexion sans fil peut être utilisée dans le réseau (N), ce dernier pouvant même utiliser uniquement des connexions sans fil (radio, WiFi, Wimax, Bluetooth®, etc.).

Dans l'exemple de la figure 2, le domaine IP (15) dispose d'une pluralité d'éléments de réseau, notamment une passerelle (2) média (media gateway), un serveur (3) proxy ainsi que des premier et second terminaux d'utilisateur (T1, T2). Chaque terminal (T1, T2) peut utiliser une portion de la topologie des options de routage lors de l'établissement d'une communication avec un terminal de radiocommunication (4), par exemple cellulaire, connecté via le réseau de radiotéléphonie (16). Dans ce cas, le serveur (3) proxy et la passerelle (2) sont utilisés. Les premier et second terminaux peuvent aussi communiquer entre eux par utilisation du serveur (3) proxy SIP, sans utilisation de la passerelle dans ce cas.

Dans un mode de réalisation de l'invention, une fonction de collecte et d'analyse de requêtes SIP est implémentée dans le serveur (3) proxy SIP et/ou dans la passerelle (2). Une telle fonction peut éventuellement, pour certains besoins, être implémentée dans l'un au moins des terminaux d'utilisateur (T1, T2). La fonction d'analyse permet avantageusement de procéder à un filtrage des requêtes SIP pour détecter des anomalies représentatives d'un usage illicite de canaux "cachés".

Le réseau (N) SIP peut disposer d'un module (30) de recensement d'anomalies qui est doté d'une fonction d'analyse de requêtes SIP. Ce module (30) de recensement d'anomalies permet de collecter l'ensemble des requêtes SIP échangées entre chacun des terminaux client (T1, T2, 4) et le serveur (3) proxy SIP. Il peut également collecter les requêtes SIP transmises via la passerelle (2) en provenance d'un autre réseau IP vers un terminal client (T1, T2, 4). Il peut également collecter les requêtes SIP transmises depuis un terminal client (T1, T2, 4) via la passerelle (2) à destination d'un autre réseau IP. Ce module (30) de recensement d'anomalies peut être disposé au niveau du serveur (3) proxy. Alternativement, plusieurs modules (30) de recensement d'anomalies peuvent être prévus dans le réseau (N) SIP, de préférence dans des éléments de réseau du domaine IP (15).

Le procédé selon l'invention permet de gérer et contrôler des sessions multimédia, réalisées suivant un protocole de signalisation déterminé (par exemple SIP) entre les terminaux de communication (T1, T2, 4) reliés au réseau (N). En référence à la figure 1, le procédé comprend par exemple :
- une étape (50) de recensement d'anomalies représentatives d'usages illicites du protocole de signalisation ;
- une étape (500) de définition de réactions en fonction de l'anomalie recensée ;
- une étape (51) de collecte de l'ensemble des requêtes échangées entre un terminal client et un serveur proxy ;
- une étape (52) d'analyse des requêtes collectées pour détecter des anomalies, par utilisation d'une pluralité d'indicateurs associés chacun à une des anomalies recensées.

En cas de détection (53) d'au moins une anomalie, le procédé prévoit dans l'exemple de la figure 1 une étape (54) de déclenchement, par le serveur (3) proxy, d'une réaction en correspondance avec l'anomalie détectée. Cette réaction peut avantageusement inclure une intervention en temps réel au cours de la communication relative au message qui comporte l'anomalie. On comprend ainsi que le procédé permet une détection et un filtrage sur le protocole de signalisation du réseau (N), par exemple entre le terminal client (T1, T2, 4) et le serveur (3) proxy. La collecte de l'ensemble des requêtes établies avec le même protocole de signalisation (SIP ou protocole de signalisation similaire) permet de centraliser la gestion des sessions. L'ensemble des requêtes échangées entre un terminal client (T1, T2, 4) et le serveur proxy (3) de communication et vice versa peuvent ainsi être analysées.

On peut avantageusement s'assurer de la non-propagation d'information entre les abonnés au travers de l'infrastructure grâce à la détection des anomalies. Des seuils peuvent être utilisés pour détecter une taille de Caller-ID inhabituelle. Dans l'exemple de l'infrastructure SIP, comme illustré à la figure 2, le procédé selon l'invention peut permettre par exemple de ne pas prolonger l'information du CALL_ID d'un émetteur vers un destinataire. Dans un tel mode de réalisation de l'invention, il est permis de gérer au niveau d'un module de conversion ou fonction (P) du réseau (N) SIP deux champs CALL-ID différents : un dédié à chacun des échanges émetteur/Proxy de communication et un second dédié à chacun des échanges proxy de Communication/destinataire. Ladite fonction (P) est associée au module (30) de recensement dans l'exemple de la figure 2.

En référence à la figure 1, une étape (55) de substitution de données d'identification peut être réalisée pour chacune des requêtes, par le serveur proxy. Cette étape (55) de substitution est effectuée avant de transférer un message vers un terminal destinataire, pour s'assurer de la non-propagation d'information cachée entre des terminaux.

Le procédé selon l'invention peut permettre d'appliquer un filtre d'analyse de type comportementale ou à base de signature afin de détecter les anomalies d'usages illicites. L'approche comportementale consiste à analyser si un utilisateur a eu un comportement anormal par rapport à l'usage habituel des transactions SIP. L'approche par scénarios nécessite une base de données de signatures anormales pour effectuer l'analyse. Une comparaison de ces signatures avec les paquets capturés permet de conclure s'il y a eu oui ou non un usage illicite. C'est ce qui s'appelle le 'pattern matching'. Alternativement ou de façon complémentaire, le procédé peut utiliser la fonction (P) pour corréler les événements et réagir selon des scénarios définis (blocage de communication, émission de ticket de facturation, etc.). L'établissement de canaux de communication est donc avantageusement contrôlé grâce au filtrage effectué au sein du domaine (15) IP, sur les requêtes SIP (ou protocole de signalisation similaire). Dans un mode de réalisation de l'invention, l'intervention relative au message de requête associé à une anomalie détectée n'empêche pas d'acheminer (56) la requête jusqu'au terminal destinataire. Dans ce cas, le procédé peut prévoir l'établissement d'une facturation supplémentaire liée à l'utilisation d'un canal caché.

Les indicateurs d'anomalies sont paramétrés pour permettre une vérification de l'utilisation de canaux cachés. La transmission de données à travers les messages de signalisation dans le but d'éviter la taxation et/ou l'enregistrement peut alors être détectée et même facturée. Les indicateurs prennent en compte la modularité de SIP et correspondent à chaque type de canal caché susceptible de véhiculer une information. L'exemple de message SIP illustré en annexe rappelle la syntaxe des messages SIP. Les messages SIP sont codés en utilisant la syntaxe de message http/1.1 (RFC 2068). Le jeu de caractères utilisé est défini dans la norme ISO 10646 et utilise le codage UTF (RFC 2279). Les lignes sont terminées par les caractères CR LF (Retour Chariot, Nouvelle Ligne). Il existe deux types de messages, les requêtes et les réponses. Certains des champs d'en-tête sont présents à la fois dans les requêtes et les réponses et forment l'en-tête général (comme le Call-ID, CSeq, from, to et via). L'organisation d'une requête SIP laisse deviner des failles pour utiliser des champs de façon cachée vis-à-vis du réseau. Selon le procédé de gestion selon l'invention, il peut être prévu autant d'indicateurs que de techniques d'acheminement caché d'information, par exemple :
- un indicateur pour une utilisation anormale de la méthode Message ;
- au moins un indicateur pour contrôler un remplissage anormal des divers en-têtes divers des paquets SIP ;
- un indicateur pour les champs de la payload SDP ;
- un indicateur pour un remplissage anormal de la description du code réponse ;
- des indicateurs pour Call-ID, tag et branch.En référence aux figures 1, 2 et 5, l'étape (51) de collecte peut consister en une capture de tous les échanges TCP ou UDP/SIP. Les transactions SIP sont rassemblées en utilisant les en-têtes « Cseq » par exemple. En effet chaque transaction est identifiée par une valeur commune de l'en-tête « Cseq » qui est un identificateur servant à rapprocher les requêtes des réponses correspondantes au sein d'une transaction SIP. L'identificateur est composé du nom de la méthode utilisée et d'un numéro de séquence qui peut être arbitraire. Les réponses à une requête doivent avoir un en-tête « Cseq » identique à cette dernière.

L'étape (52) d'analyse des requêtes collectées correspond par exemple à un filtrage qui est appliqué sur le trafic des transactions SIP selon différentes méthodes d'analyse afin de détecter notamment un ou plusieurs des points suivants :
- analyse d'anomalie de trafic par détection des modifications des typologies de trafic comme par exemples augmentation des fréquences de requêtes, nombre important de requêtes/réponses dans une même transaction, augmentation de code d'erreur (code 480 « temporairement non disponible »).
- augmentation des tailles dans les différents champs du protocole SIP.

Des indicateurs avec un seuil de détection sont utilisés pour reconnaître une augmentation anormale d'un champ du protocole SIP. Des indicateurs avec un seuil d'occurrence d'un événement répété ou anormal sont aussi utilisés. Le module (30) de recensement d'anomalies, en cas de détection d'une anomalie, fournit des informations permettant de sélectionner un ou plusieurs modules de réaction (non représentés) programmés chacun pour commander une action en fonction de l'anomalie recensée. Chaque module de réaction est activé par exemple par le serveur (3) proxy et déclenche une intervention en temps réel, au cours d'une communication relative au message qui comporte l'anomalie. Les modules de réactions peuvent naturellement être groupés dans un même module d'intervention.

La détection par seuil (par exemple champ de l'en-tête trop grand) et la décision statistique de détection d'un comportement anormal (trop d'échange de messages de signalisation dont le résultat est un échec de l'établissement d'une communication et donc une non-traçabilité des communications en un cours laps de temps) sont des fonctionnalités à la disposition du module (30) de recensement d'anomalies. Un fois un seuil atteint, la fonction (P) associée au module (30) peut, à titre d'exemple non limitatif, bloquer la communication/signalisation, émettre un ticket d'usage identifiant les interlocuteurs pour relater qu'une communication est en cours et déclencher un "accounting" pour facturation. Il y a donc dans ce cas une notion de maintenir un contexte de communication gérant une multiplicité de compteurs relatifs à plusieurs usages et en particulier la taille des champs d'en-tête (header) scannés qui permet d'évaluer le volume d'information échangé. Un filtrage complémentaire peut aussi permettre d'analyser des paquets MESSAGE ou les paquets des autres méthodes proposées dans le protocole SIP (ex : SUBSCRIBE/NOTIFY).

Dans un mode de réalisation de l'invention, le module de réaction exécute, suivant les événements anormaux détectés, un ou plusieurs des scénarios pré-paramétrés, comme par exemple :
- Coupure de transaction trafic SIP ;
- Génération de ticket de facturation ;
- Envoi d'une alerte de notification en temps réel à un centre de supervision de la partie IP de réseau (15).

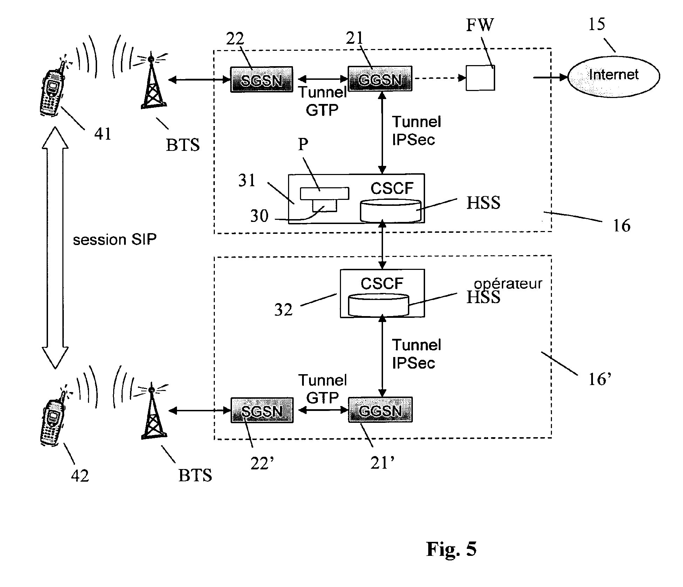

Le filtrage des flux SIP (ou flux d'un protocole similaire) implique une étape (50) préalable de recensement des anomalies. Les indicateurs d'anomalies sont à la disposition du module (30) de recensement. L'étape (51) de collecte est permise grâce à l'insertion d'un système de gestion selon l'invention dans l'infrastructure de l'opérateur mobile. Ce système assure par exemple une coupure des flux SIP entre le terminal client (T1, T2, 4) et le serveur (3) proxy. L'ensemble des transactions bilatérales SIP échangées entre le terminal (T1, T2, 4) et le serveur (6) sont capturées. Dans l'exemple de la figure 5, une fonction (P) associée au module (30) de recensement des anomalies est située au niveau d'un serveur (3) proxy SIP d'un premier réseau de radiotéléphonie (16). Cette fonction (P) permet de gérer les requêtes SIP et d'éviter l'utilisation de canaux cachés via le premier réseau de radiotéléphonie (16). Ainsi, une session SIP entre deux terminaux (41, 42) communiquant via des réseaux (16, 16') différents de radiotéléphonie peut être établie avec un contrôle de l'utilisation du protocole SIP afin d'empêcher un usage illicite des possibilités d'insertion cachée d'information dans les requêtes.

La forme de réalisation de la figure 5 montre l'infrastructure de deux opérateurs de radiotéléphonie différents avec une communication entre ces réseaux via des serveurs (31, 32) CSCF (Call Session Control Function) dotés par exemple de base de données HSS (Home Subscriber Server) pour récupérer les données d'abonnés. Des passerelles (21, 21') et des commutateurs (22, 22') prévus dans chacun de ces réseaux de radiotéléphonie (16, 16') permettent d'acheminer les messages jusqu'à des terminaux mobiles de radiocommunication (41, 42). Un protocole GTP (GPRS Tunnel Protocol) permet de communiquer entre une passerelle (21, 21') de type GGSN (Gateway GPRS Support Node) à un commutateur (22, 22') de type SGSN (Serving GPRS Support Node). Un pare-feu (FW) peut être placé à l'interface entre au moins un des réseaux (16) de radiotéléphonie et le domaine (15) de type Internet.

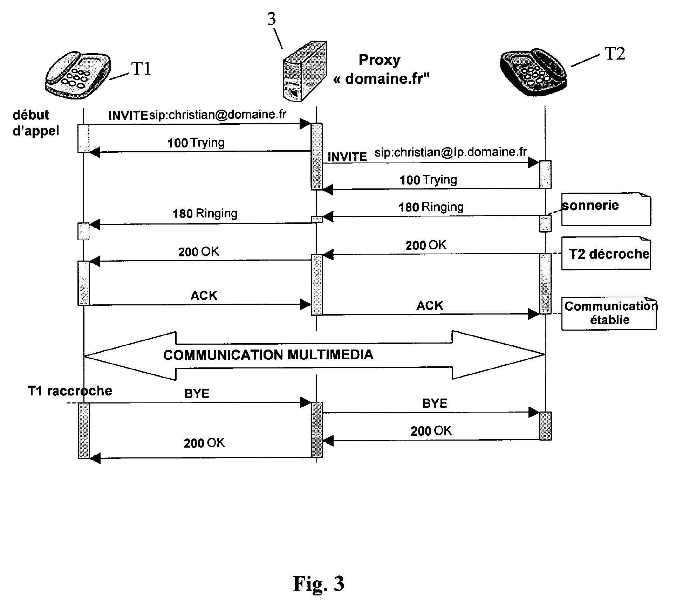

La figure 3 permet de rappeler le déroulement conventionnel d'un scénario d'appel avec un protocole de signalisation. Les scénarios simples de communication utilisent des requêtes SIP telles que : INVITE, ACK, BYE. Un terminal client SIP (T1) appelle un autre terminal (T2) en utilisant le message INVITE. Le message envoyé contient des informations permettant d'établir les flux media vers le terminal client (T1) appelant. L'exemple ci-après illustre un message d'invitation selon le protocole SIP :
INVITE sip *christian*@*domaine.fr*SIP/2.0
Via: SIP/2.0/UDP {*mon adresse privée : port*};branch={branch}
Max_forwards: 70
From: {"Christian"} <sip:{*christian*@*domaine.fr*}>;
To: {Paul} <sip:{*paul*@*domaine.fr*}>
Call-ID: {2966324558-edc-6548-fg8g9}
CSeq: {1} INVITE
Expires: 1800
Content-Length: {187}

Un serveur SIP, par exemple le serveur (3) proxy du domaine « domaine.fr », répond à une requête SIP au moyen d'une ou plusieurs réponses. La majorité des réponses, dont les codes sont de la forme 2xx, 3xx, 4xx, 5xx, et 6xx sont des réponses « finales » et terminent la transaction courante. Les réponses de la forme 1xx sont des réponses provisoires. Un exemple de réponse est fourni ci-après :
SIP/2.0 100 Trying
Via: SIP/2.0/UDP {*mon adresse privée* : *port*};branch={branch}
From: Paul} <sip:{*paul*@*domaine.fr*
To: {}>{"Christian"} <sip:{*christian*@*domaine.fr*}>;
Call-ID: {2966324558-edc-6548-fg8g9}
CSeq: {1} INVITE

Dans l'exemple de la figure 3 :
- le code de réponse « 100 » signifie « Trying » en cours de traitement ;
- le code de réponse « 180 » signifie « Ringing » sonnerie en cours ; et
- le code de réponse « 200 » signifie « OK ».

Pour comprendre la notion de transactions et de retransmission de messages, il faut ici rappeler qu'un dialogue SIP est identifié par la combinaison des champs « From », « To », Call-ID et du numéro de séquence « Cseq ». Lorsque le dialogue est établi, toutes les requêtes et les réponses doivent inclure ces champs d'en-tête. Chaque transaction est identifiée par la valeur commune de l'en-tête « Cseq » (le nom de la méthode et le numéro de séquence doivent être identiques). Le système selon l'invention peut permettre d'analyser dans chaque transaction le type de requêtes émises avec les réponses associées et de comparer les transactions entre elles.

Dans un mode de réalisation de l'invention, le système de gestion permet tout particulièrement de surveiller la répétition des sessions de protocole de signalisation pour détecter un usage de canaux cachés, tel que l'envoi d'un fichier dans l'en-tête « Call-ID ». Pour ce type de session, le déroulement de la communication entre un terminal émetteur (T1) et un terminal récepteur (T2) se déroule comme suit :
- tout d'abord, l'émetteur (T1) envoie un message INVITE au récepteur (T2) en passant les données dans le Call-ID ;
- le récepteur (T2) répond avec le code « 480 *Temporarily unavailable* » et le même Call-ID ; le renvoi du code 480 signifie donc que l'utilisateur du récepteur (T2) refuse l'appel ;
- le code 480 ainsi retourné permet à l'émetteur (T1) de s'assurer que le récepteur (T2) a bien reçu le message INVITE et cet émetteur (T1) poursuit en envoyant alors un message d'acquittement ACK avec le même Call-ID pour confirmer la fermeture de la session SIP.

Dans ce cas, le serveur (3) proxy considère que l'appel n'a jamais abouti et que la session est terminée. Comme une séquence INVITE - 480 - ACK est considérée comme un appel non abouti, il est tout à fait possible de faire se succéder plusieurs séquences de ce type afin de transmettre les informations. On comprend qu'un nombre important de séquences de ce type doit être considéré comme anormal. Le système selon l'invention peut aisément permettre de détecter ce type d'anomalie grâce à un indicateur propre à cette anomalie.

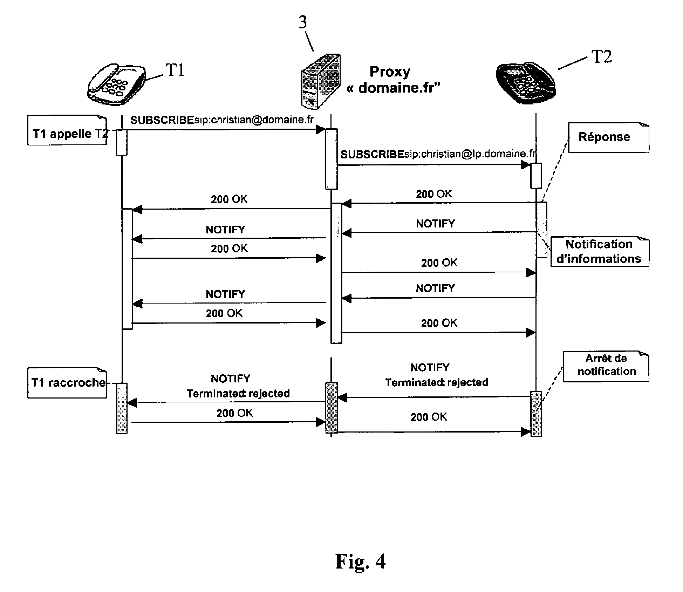

En référence à la figure 4, des requêtes génériques comme SUBSCRIBE et NOTIFY peuvent être aussi contrôlées grâce aux indicateurs dont dispose le système selon l'invention. Le fait d'utiliser les requêtes SUBSCRIBE et NOTIFY peut être surveillé et une réaction par exemple déclenchée si du contenu multimédia est échangé via des canaux cachés. Ces deux requêtes génériques peuvent être routées par les serveurs (3) proxy à l'aide des en-têtes « From » et « To » et sont acquittées par des réponses. La requête SUBSCRIBE est envoyée par un terminal client (T1) qui souhaite recevoir certains événements vers un serveur (3) qui génère les événements (par exemple : une demande d'informations de présence à une application de type liste d'amis « buddy list »). La requête SUBSCRIBE contient dans l'en-tête « Expires » qui indique la durée de la souscription. La requête NOTIFY sert à envoyer des notifications d'événements.

Ces requêtes SUBSCRIBE et NOTIFY peuvent créer un dialogue SIP, elles n'ont pas besoin de requête INVITE et elles peuvent être envoyées de manière asynchrone à n'importe quel moment. L'opérateur du réseau, grâce à un système selon l'invention, peut contrôler ce dialogue. Il suffit pour cela d'intégrer ce type de scénario dans le dispositif d'analyse et de filtrage. Le module (30) de recensement d'anomalies peut disposer d'un indicateur relatif à une succession d'évènements comparables aux étapes permettant d'initier un dialogue SIP de façon détournée.

Un des avantages de l'invention est de permettre une surveillance des messages en temps réel, afin que l'opérateur puisse maîtriser l'usage des canaux parallèles dans les protocoles de voix sur IP. Ainsi, l'ensemble des canaux parallèles disponibles via le protocole SIP peut être contrôlé par un système de gestion de requêtes SIP selon l'invention. La cartographie des moyens de communications parallèles disponibles permet de fournir les indicateurs pertinents qui vont être utilisés par le module (30) de recensement d'anomalies.

Chaque description des tests nécessaire à la découverte des moyens de communications parallèles peut être pré-codée séquentiellement. Une grammaire peut décrire la liste des champs du protocole de signalisation que le module (30) de recensement d'anomalies pourrait utiliser et évaluer. Une fois la cartographie réalisée, il est envisageable d'évaluer la bande passante disponible pour chacun des canaux parallèles par une succession de tests récurrents de disponibilité des canaux parallèles cartographiés.

Pour s'assurer qu'aucun contenu n'est transmis parallèlement par le champ Call_ID, le système selon l'invention peut spécifier (par exemple réécrire) ce champ. Cette réécriture peut s'effectuer via la fonction (P) associée au serveur (3) proxy par exemple. Dans ce cas, la fonction (P) gère deux champs CALL-ID différents, afin de ne pas propager une information par ce champ. Une simple réécriture au niveau du serveur (3) proxy permet d'empêcher la propagation comme peut l'apprécier l'homme du métier (technique connue en soi d'enrôlement, écrasement des champs par rapport aux données initialement enregistrées, etc..). Le nombre de caractères dans ce type champ sera donc limité grâce à l'opération de réécriture réalisée par la fonction (P) de conversion. D'autres champs et canaux parallèles peuvent être gérés de façon analogue.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes et l'invention ne doit pas être limitée aux détails donnés ci-dessus.

### ANNEXE

### Exemple de message SIP

INVITE sip:jacques@mondomaine.fr SIP/2.0
Via: SIP/2.0/UDP 139.100.184.12 : 5040
Via: SIP/2.0/UDP sipserv.mondomaine.fr : 5060
Max-Forwards: 70
To: Jacques <sip:jacques@ mondomaine.fr>
From: Paul <sip:paul@mondomaine.fr>
Call-ID: 2966324558-edc-6548-fg8g9
CSeq: 1 INVITE
Content-Type: application/sdp
Content-Length: 187
<payload SDP>.

## Revendications

1. Procédé de gestion de sessions multimédia, réalisées suivant un protocole de signalisation déterminé, entre des terminaux de communication reliés par un réseau de télécommunications, **caractérisé en ce qu'**il comprend au préalable une étape (50) de recensement d'anomalies représentatives d'usages illicites du protocole de signalisation et une étape (500) de définition de réactions en fonction de l'anomalie recensée, le procédé comprenant en outre :
- une étape (51) de collecte de l'ensemble des requêtes échangées entre un terminal client (T1, T2, 4) et un serveur (3) proxy ;
- une étape (52) d'analyse des requêtes collectées pour détecter des anomalies, par utilisation d'une pluralité d'indicateurs associés chacun à une des anomalies préalablement recensées.

2. Procédé selon la revendication 1, comprenant en cas de détection (53) d'au moins une anomalie, une étape (54) de déclenchement par le serveur (3) proxy d'une réaction en correspondance avec l'anomalie détectée, ladite réaction incluant une intervention en temps réel au cours de la communication relative au message qui comporte l'anomalie.

3. Procédé selon la revendication 1 ou 2, comprenant une étape (55) de substitution de données d'identification dans chaque requête, par le serveur proxy, avant de transférer un message vers un terminal destinataire, pour s'assurer de la non-propagation d'information cachée entre des terminaux.

4. Procédé selon une des revendications 1 à 3, dans lequel l'étape (52) d'analyse des requêtes collectées utilise un indicateur d'anomalie relatif à l'entête des paquets SIP des requêtes.

5. Procédé selon une des revendications 1 à 4, dans lequel l'étape (52) d'analyse des requêtes collectées utilise un indicateur d'anomalie relatif au champ d'identification de l'appelant « Call ID » de chaque requête.

6. Procédé selon une des revendications 1 à 5, dans lequel l'étape (52) d'analyse des requêtes collectées utilise un indicateur d'anomalie relatif à une méthode SUBSCRIBE/NOTIFY.

7. Procédé selon une des revendications 1 à 6, dans lequel l'étape d'analyse des requêtes collectées utilise un indicateur d'anomalie relatif à l'une des méthodes utilisées dans le protocole SIP permettant une exploitation des canaux cachés.

8. Procédé selon une des revendications 1 à 7, dans lequel l'étape (52) d'analyse des requêtes collectées utilise un indicateur d'anomalie relatif à un descriptif de code de réponse.

9. Procédé selon une des revendications 1 à 8, dans lequel l'étape (52) d'analyse des requêtes collectées utilise un indicateur d'anomalie relatif au champ SDP dans la charge utile d'une requête SIP.

10. Procédé selon une des revendications 1 à 9, dans lequel l'étape (52) d'analyse des requêtes collectées utilise un indicateur d'anomalie relatif à une balise ou TAG de chaque requête SIP.

11. Procédé selon la revendication 2, dans lequel ladite réaction comprend une étape de facturation qui est fonction de l'anomalie détectée, dans laquelle des informations nécessaires à la facturation et respectant les obligations légales d'un opérateur sont transmises vers un serveur de facturation dédié.

12. Procédé selon la revendication 2 ou 11, dans lequel ladite réaction comprend une transmission d'un message d'alerte pour notifier en temps réel au moins une anomalie à un centre de supervision de la partie IP (15) du réseau (N).

13. Procédé selon une des revendications 1 à 12, comprenant une étape de gestion par un module de conversion (P) associé au serveur (3) proxy, pour une même requête SIP, d'une paire de champs, dans laquelle un deuxième champ est réécrit à partir du premier champ.

14. Procédé selon la revendication 2, dans laquelle la réaction comprend une étape de coupure de la session SIP.

15. Système de gestion de sessions multimédia destiné à être utilisé dans un réseau de type SIP entre au moins un terminal client (T1, T2) et un serveur (3) proxy SIP, **caractérisé en ce qu'**il comprend :
- des moyens de stockage pour stocker des indicateurs d'anomalies représentatives d'usages illicites du protocole de signalisation ;
- un module de recensement d'anomalies, couplé audits indicateurs, doté d'une fonction d'analyse de requêtes SIP pour collecter l'ensemble des requêtes SIP échangées entre chacun des terminaux client (T1, T2) et le serveur (3) proxy SIP ;
- des modules de réaction programmés chacun pour commander une action en fonction de l'anomalie recensée, chaque module de réaction étant activé par le serveur (3) proxy et déclenchant une intervention en temps réel au cours d'une communication relative au message qui comporte l'anomalie.

16. Système de gestion selon la revendication 14, dans lequel un module de conversion (P) est prévu dans le serveur (3) proxy pour gérer, pour une même requête SIP, deux champs différents dont un second champ est réécrit à partir d'un premier champ par des moyens de réécriture du module de conversion (P).

17. Réseau (15) utilisant le protocole SIP, comprenant une pluralité d'éléments de réseau, **caractérisé en ce qu'**il comporte le système de gestion de sessions multimédia selon la revendication 14.
